# EUROPEAN PATENT APPLICATION

(11) **EP 4 152 554 A1**
(43) Date of publication of application: **22.03.2023**
(21) Application number: 21826576.7
(22) Date of filing: 22.02.2021
(51) Int. Cl.: H02J 7/00

(54) **BATTERY DEVICE CONTROL CIRCUIT**

(30) Priority: 19.06.2020 CN 202010567083
(71) Applicant: DONGGUAN POWERAMP TECHNOLOGY LIMITED, Dongguan, Guangdong 523000 (CN)
(72) Inventor: SU, Jinwei, Dongguan, Guangdong 523000 (CN); TAN, Shuiping, Dongguan, Guangdong 523000 (CN)
(74) Representative: Icosa
(86) International application number: PCT/CN2021/077296
(87) International publication number: WO 2021/253858

(57) **Abstract**

An embodiment of the present application provides a control circuit for a battery device, which includes a first power management module, a control module, and a first enabling module. The first power management module receives a first enabling signal of a trigger element of the battery device and a first voltage output by a battery module, and converts the first voltage into a second voltage to supply power to the control module and the first enabling module. The control module is used to control the first enabling module to output a second enabling signal to the first power management module. When the control module is abnormally reset, the first enabling module outputs the second enabling signal to the first power management module. Therefore, serious consequences such as sintering caused since a relay and other switching elements are directly disconnected without being discharged are prevented, so that a very good power supply protection effect is achieved and the reliable operation of a system is ensured.

## Description

### TECHNICAL FIELD

The present application relates to the field of battery technology, and in particular to a control circuit for a battery device.

### BACKGROUND

At present, since a battery system is limited by the requirements of a battery on energy density ratio and energy consumption, a battery management system (BMS) cannot be kept at a working state all the time, otherwise the energy consumption of the battery is increased and an effective use ratio of the battery is reduced. A power circuit is one of core circuits of the battery management system. The integrity of a power supply is the key of ensuring reliable operation of the entire system. Abnormal power failures should not occur, otherwise there will be risks such as EE failure or Flash erasure, which will cause a system failure.

### SUMMARY

In view of the foregoing, it is necessary to provide a control circuit for a battery device. The control circuit for a battery device according to the embodiment of the present application can avoid the problem of system instability caused by abnormal power failures.

The embodiment of the present application provides a control circuit for a battery device. The battery device comprises a battery module and the control circuit. The control circuit is used to be electrically connected between the battery module and an output port of the battery device, wherein the control circuit comprises: a first power management module, a control module, and a first enabling module; the first power management module is used to receive a first enabling signal output by a trigger element of the battery device and a first voltage output by the battery module, and convert the first voltage into a second voltage to supply power to the control module and the first enabling module; the control module is used to control the first enabling module to output a second enabling signal to the first power management module; and when the control module is abnormally reset, the first enabling module outputs the second enabling signal to the first power management module.

According to some embodiments of the present application, the first enabling module comprises a logic element, a first input pin, a second input pin, and a third input pin of the logic element are all electrically connected to the control module, a power pin of the logic element is electrically connected to a power supply, a grounding pin of the logic element is grounded, and an output pin of the logic element is electrically connected to the first power management module.

According to some embodiments of the present application, the battery control circuit further comprises a second power management module, the second power management module is electrically connected between the first power management module and the control module, and the second power management module is used to convert the second voltage into a third voltage to supply power to the control module.

According to some embodiments of the present application, the battery control circuit further comprises a third power management module, the third power management module is electrically connected between the first power management module and the first enabling module, and the third power management module is used to convert the second voltage into a fourth voltage to supply power to the first enabling module.

According to some embodiments of the present application, the control circuit further comprises a second enabling module, the second enabling module is electrically connected between the first power management module and the control module, and the control module is used to control the second enabling module to output a third enabling signal to the first power management module.

According to some embodiments of the present application, the battery control circuit further comprises a filtering module, the filtering module is electrically connected between the battery module and the first power management module, and the filtering module is used to filter the first voltage output by the battery module and then provide the same to the first power management module.

According to some embodiments of the present application, the first power management module comprises a power management chip and a first diode, an enabling pin of the power management chip is electrically connected to a cathode of the first diode and the output pin of the logic element is electrically connected to an anode of the first diode.

According to some embodiments of the present application, the first power management module further comprises a second diode, the second enabling module comprises a resistor, a first terminal of the resistor is electrically connected to the control module, a second terminal of the resistor is electrically connected to an anode of the second diode, and a cathode of the second diode is electrically connected to the enabling pin of the power management chip.

According to some embodiments of the present application, the first power management module further comprises a third diode, an anode of the third diode is electrically connected to the trigger element, and a cathode of the third diode is electrically connected to the enabling pin of the power management chip.

According to some embodiments of the present application, the control circuit further comprises a switching element, and the first power management module is electrically connected between the battery module and the switching element to supply power to the switching element and the control module.

According to some embodiments of the present application, the control module is abnormally set when a load resistor connected to the output port of the battery device changes suddenly or a program of the control module is not controlled by logic.

According to some embodiments of the present application, the first enabling signal is used to control the working of the first power management module to convert the first voltage into the second voltage.

According to some embodiments of the present application, the control module is further used to output a latch signal to latch an output state of the first enabling module.

According to some embodiments of the present application, when the control module detects that the battery device is at an idle state, the control module removes the latching of the output state of the first enabling module and control the first enabling module to output a sleep signal to the first power management module, so that the battery management system is controlled to enter a sleep state. In this way, the battery management system can be intelligently controlled to enter the sleep state and a wake-up state.

According to the control circuit for a battery device provided by the embodiment of the present application, the first voltage of the battery module is converted into the second voltage through the first power management module to supply power to the control module and the first enabling module. By the control module, the first enabling module is also controlled to output the enabling signal to the first power management module. Therefore, if the control module is reset abnormally, the enabling signal can still be output to the first power management module to ensure that the enabling of the first power management module is always at a high level, that is, the first voltage can still be output normally. Serious consequences such as sintering caused since a relay and other switching elements are directly disconnected without being discharged are prevented. A very good power supply protection effect is achieved and the reliable operation of the system can be ensured.

### BRIEF DESCRIPTION OF DRAWINGS

FIG. 1 is a block diagram of a preferred embodiment of a battery device according to the present application.
FIG. 2 is a schematic diagram of a preferred embodiment of the battery device in FIG. 1.
FIG. 3 is a circuit diagram of the connection between a first enabling module and a control module in FIG. 2.
FIG. 4 is a circuit diagram of the connection between a first power management module and a filtering module in FIG. 2.

### Reference signs of main elements

| | |
|---|---|
| Battery device | 100 |
| Control circuit | 10 |
| First power management module | 11 |
| Control module | 12 |
| First enabling module | 13 |
| Second enabling module | 14 |
| Second power management module | 15 |
| Third power management module | 16 |
| Filtering module | 17 |
| Switching element | 18 |
| Protection module | 19 |
| Battery module | 20 |
| Output port | 30 |
| Logic element | U1 |
| Control chip | U2 |
| Power management chip | U3 |
| Diodes | D1 to D4 |
| Voltage stabilizing diode | D5 |
| Resistors | R1 to R16 |
| Capacitors | C1 to C19 |
| Inductor | L1 |

The following specific embodiments will describe the present application in more detail in conjunction with abovementioned accompanying drawings.

### DETAILED DESCRIPTION OF EMBODIMENTS

The following clearly and fully describes the technical solutions in the embodiments of the present application in conjunction with the accompanying drawings in the embodiments of the present application. Apparently, the described embodiments are merely a part but not all of the embodiments of the present application.

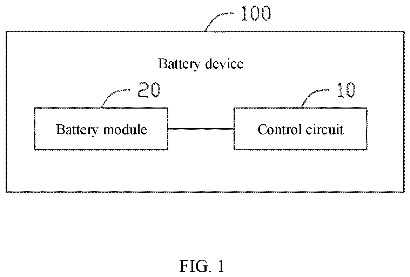

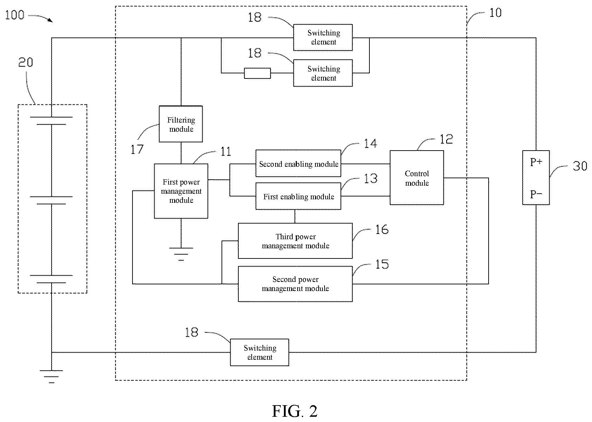

Please refer to FIG. 1 and FIG. 2, in which an embodiment of the present application provides a battery device 100. The battery device 100 includes a control circuit 10 and a battery module 20. In the embodiment of the present application, the control circuit 10 is electrically connected between the battery module 20 and an output port 30 of the battery device 100. The control circuit 10 may include a plurality of switching elements 18 which are electrically connected between the battery module 20 and an output port 40, so as to control the charging and discharging of the battery module 20.

It can be understood that the switching element 18 in the embodiment of the present application may be a relay, the battery module 20 may be formed by a plurality of battery cell units connected in series, and the output port 30 is used to electrically connect an external device or a charging device.

Specifically, in the embodiment of the present application, the control circuit 10 may include a first power management module 11, a control module 12, a first enabling module 13, a second enabling module 14, a second power management module 15, and a third power management module 16.

The first power management module 11 is electrically connected to the battery module 20. The first enabling module 13 is electrically connected between the control module 12 and the first power management module 11. The second enabling module 14 is electrically connected between the control module 12 and the first power management module 11. The second power management module 15 is electrically connected between the first power management module 11 and the control module 12. The third power management module 16 is electrically connected between the first power management module 11 and the first enabling module 13.

In the embodiment of the present application, the first power management module 11 is used to receive an enabling signal output by a trigger element (not shown) of the battery device 100 and a first voltage output by the battery module 20. The first power management module may convert the first voltage into a second voltage according to the enabling signal, so as to supply power to the control module 12 and the first enabling module 13.

For example, when a user presses the trigger element (for example, a press switch), by triggering, the enabling signal is output to the first power management module 11. The enabling signal is used to control the working of the first power management module 11 to convert the first voltage into the second voltage. That is, the first power management module 11 will start to work after receiving the enabling signal. Therefore, the first power management module 11 may also covert the first voltage output by the battery module 20 to output the second voltage, so as to supply power to the control module 12 and the first enabling module 13. It can be understood that the first voltage in the embodiment of the present application may be a direct current (DC) voltage of 48V, and the second voltage may be a DC voltage of 12V.

Then, the second power management module 15 and the third power management module 16 receive the second voltage. The second power management module 15 is used to convert the second voltage into a third voltage to supply power to the control module 12. The third power management module 16 will be used to convert the second voltage into a fourth voltage to supply power to the first enabling module 13.

For example, the second power management module 15 may convert the 12V voltage output by the first power management module 11 to output a 5V DC voltage, so as to supply power to the control module 12. That is, the control module 12 starts to be powered on for working when receiving the 5V DC voltage. The third power management module 16 may convert the 12V voltage output by the first power management module 11 to output a DC voltage of 3.3V, so as to supply power to the first enabling module 13. It can be understood that the control module 12 in the embodiment of the present application may be a micro control unit (MCU).

In the embodiment of the present application, the control module 12 immediately sets the state of an enabling pin of the first power management module 11 to a high level after being powered on. That is, the control module 12 outputs a high-level signal to the second enabling module 14, so that the second enabling module 14 will output a high-level enabling signal to the enabling pin of the first power management module 11. Therefore, even after a key switch is removed, the state of the enabling pin of the first power management module 11 is still at the high level, and the first power management module 11 can still work normally. Therefore, it can be ensured that the control module 12 can quickly lock the enabling of the first power management module 11 after being powered on for working, so as to ensure a normal startup speed.

In the embodiment of the present application, the control module 12 is used to control the first enabling module 13 to output the enabling signal to the first power management module 11.

Specifically, the control module 12 outputs a control signal to the first enabling module 13, so that the first enabling module 13 is controlled to output the enabling signal to the first power management module 11. The control module 12 is also used to output a latch signal to the first enabling module 13 to latch the previous output state of the first enabling module 13. When the control module 12 is abnormally reset, the first enabling module 13 can output the enabling signal to the first power management module 11 again. Therefore, even if the control module 12 needs to be reset due to an abnormal situation, the first enabling module 13 can maintain the previous output state and output the enabling signal to the first power management module 11, thereby ensuring that the first power management module 11 will not be powered down.

It can be understood that in the embodiment of the present application, when a load resistor connected to the output port 30 of the battery device 100 changes suddenly or a program in the control module 12 is not controlled by logic (for example, program runaway), the control module 12 will perform an abnormal reset operation.

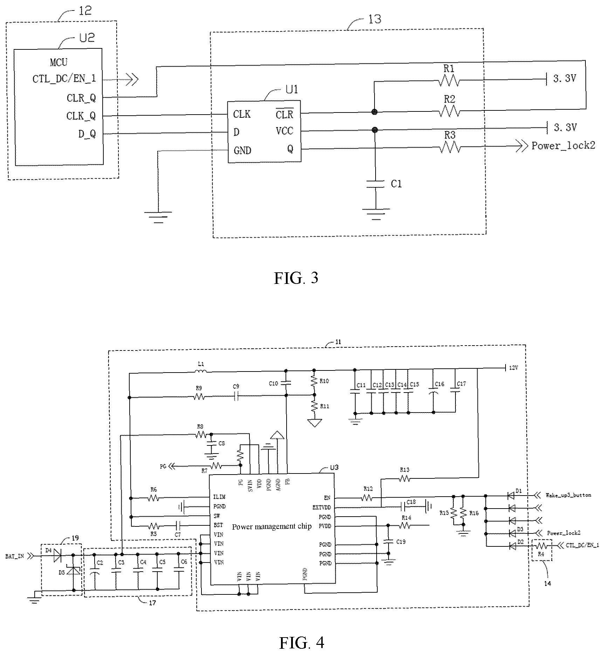

For example, the first enabling module 13 in the embodiment of the present application may include a D-type trigger (as shown in FIG. 3). The D-type trigger may include a first input pin CLK, a second input pin D, a third input pin *C̅L̅R̅*, and an output pin Q. The first input pin CLK, the second input pin D and the third input pin *C̅L̅R̅* are all electrically connected to the control module 12. A working principle of the D-type trigger U1 is as follows: when the third input pin *C̅L̅R̅* is at a high level, the second input pin D is at a low level, and the first input pin CLK is at a rising edge, the output pin Q will output the low level. When the third input pin *C̅L̅R̅* is at the high level, the second input pin D is at the high level, and the first input pin CLK is at the rising edge, the output pin Q will output the high level. When the third input pin *C̅L̅R̅* is at the high level, and the first input pin CLK is at a high-level state or low-level state, regardless of the value of the second input pin D, the output pin Q keeps the previous state. When the third input pin *C̅L̅R̅* is at the low level, regardless of the states of the first input pin CLK and the second input pin D, the output pin Q outputs the low level. Therefore, after the control module 12 is powered on, the control module 12 will output the control signal to set the third input pin *C̅L̅R̅* and the second input pin D to the high level, and configure the first input pin CLK from the low level to the high level. At this time, the output pin Q will output the high level. Then the control module 12 will output the latch signal to set the first input pin CLK to the high-level state, and the output pin Q will latch the previous state output. Therefore, when the control module is reset due to abnormal reasons, the output pin Q of the D-type trigger still outputs the high level, thereby ensuring that the enabling pin of the first power management module 11 is always at the high-level state.

In the embodiment of the present application, the battery control circuit 10 may further include a filtering module 17. The filtering module 17 is electrically connected between the battery module 20 and the first power management module 11. The filtering module 17 is used to filter the first voltage output by the battery module 20 and provide the same to the first power management module 11. For example, the filtering module 17 may filter an outside clutter signal.

Please refer to FIG. 3 and FIG. 4, which are circuit diagrams of a preferred embodiment of the battery control circuit 10 according to the present application.

In the embodiment of the present application, the first enabling module 13 may include a logic element U1, resistors R1 to R3, and a capacitor C1. The control module 12 may include a control chip U2.

A grounding pin GND of the logic element U1 is grounded. A power pin VCC of the logic element U1 is electrically connected to a 3.3V power supply. The 3.3V power supply is the power supply output from the third power management module 16. A first input pin CLK of the logic element U1 is electrically connected to a first output pin CLK_Q of the control chip U2. A second input pin D of the logic element U1 is electrically connected to a second output pin D_Q of the control chip U2. A third input pin *C̅L̅R̅* of the logic element U1 is connected to the 3.3V power supply through the resistor R1, and the third input pin *C̅L̅R̅* of the logic element U1 is also electrically connected to a third output pin CLR_Q of the control chip U2 through the resistor R2. An output pin Q of the logic element U1 is electrically connected to the first power management module 11.

It can be understood that the logic element U1 in the embodiment of the present application may be a D-type trigger.

In the embodiment of the present application, the first power management module 11 may include a power management chip U3, a first diode D1, a second diode D2, and a third diode D3. The second enabling module 14 includes a resistor R4.

Specifically, a cathode of the first diode D1, a cathode of the second diode D2, and a cathode of the third diode D3 are all electrically connected to an enabling pin EN of the power management chip U3 through a resistor R12. An anode of the first diode D1 is electrically connected to the trigger element to receive the enabling signal sent by the trigger element. An anode of the second diode D2 is electrically connected to an output pin CTL_DC/EN_1 of the control chip U2 through the resistor R4. An anode of the third diode D3 is electrically connected to the output pin Q of the logic element U1 through the resistor R3. Therefore, in order to prevent other wake-up signals from flowing back to the control module 12 or the latch chip, an anti-reverse diode is added between the resistor R4 and the enabling pin EN of the power management chip. In addition, in order to prevent the current from flowing back to the D trigger when the key is awakened, one anti-reverse diode is disposed between the output pin Q of the D follower and the first power management module 11.

Next, in the embodiment of the present application, the battery control circuit 10 may further include a protection module 19. The protection module 19 is electrically connected between the filtering module 17 and the battery module 20. The protection module 19 is used to clamp a surge current.

Specifically, the filtering module 17 may include capacitors C2 to C6, and the protection module 19 may further include a fourth diode D4 and a voltage stabilizing diode D5.

First terminals of the capacitors C2 to C6 are all electrically connected between a cathode of the fourth diode D4 and a signal pin VIN of the power management chip U3, and second terminals of the capacitors C2 to C6 are all grounded. An anode of the fourth diode D4 is electrically connected to the battery module 20. A cathode of the voltage stabilizing diode D5 is electrically connected to the cathode of the fourth diode D4. An anode of the Voltage stabilizing diode D5 is grounded.

A signal pin BST of the power management chip U3 is grounded through a capacitor C7, a resistor R5, a resistor R9, a capacitor C9 and a resistor R11 in turn. A signal pin SW of the power management chip U3 is electrically connected to a signal pin FB of the power management chip U3 through an inductor L1 and a capacitor C10. A signal pin ILIM of the power management chip U3 is electrically connected between the inductor L1 and the resistor R5 through a resistor R6. A signal pin PGND of the signal pin of the power management chip U3 is grounded. A signal pin SVIN of the power management chip U3 is electrically connected to the signal pin VIN of the power management chip U3 through a resistor R8. The signal pin FB of the power management chip U3 is also grounded through the resistor R11. The signal pin FB of the power management chip U3 also outputs a 12V power supply through a resistor R10. A signal pin EXTVDD of the power management chip U3 is grounded through a capacitor C18. The signal pin EXTVDD of the power management chip U3 is also electrically connected to first terminals of capacitors C11 to C17 through a resistor R13. Second terminals of the capacitors C11 to C17 are grounded. A signal pin PVDD of the power management chip U3 is grounded through a capacitor C 19.

A working principle of the control circuit for a battery device according to the present application will be described below by taking the circuit diagrams shown in FIG. 3 and FIG. 4 as an example.

During use, when the user presses the trigger element of the battery device, the trigger element will output an enabling module to the enabling pin EN of the power management chip U3. At this time, the power management chip U3 starts to work, and converts the first voltage (for example, 48V) output by the battery module 20, so that the second voltage (for example, 12V) is output to supply power to the switching element 18. Meanwhile, the second power management module 15 and the third power management module 16 also receive the 12V voltage output by the first power management module 11. Then, the second power management module 15 converts the 12V voltage to output a 5V voltage to the control chip U2. At this time, after being powered on, the control chip U2 starts to work, so that the enabling pin of the power management chip U3 is set to a high level through the resistor R4 and the second diode D2. In this way, even if the key wake-up switch is removed, the state of the enabling pin of the first power management module 11 is still at the high level, and the first power management module 11 can still work normally. Therefore, it can be ensured that the enabling of the power management chip U3 can be quickly locked after the power management chip U2 is powered on for working, so as to ensure a normal startup speed.

Then, the control chip U2 will also control the third input pin *C̅L̅R̅* and the second input pin D of the logic element U1 to be both at the high level, and the first input pin CLK will be configured from the low level to the high level. At this time, the output pin Q of the logic element U1 will output a high-level enabling signal to the enabling EN of the power management chip U3. Further, the control chip U2 will continue to set the first input pin CLK of the logic element U1 to the high-level state. At this time, the output pin Q of the logic element U1 will latch the previous state output, that is, latch the high-level enabling signal. Therefore, when the control chip needs to be reset due to abnormal reasons, the output pin Q of the logic element U1 can still output the high-level enabling module to the enabling pin of the power management chip U3. Furthermore, it can be ensured that the enabling pin of the power management chip U3 is always at the high-level state. That is, after the control chip U2 is powered on, the control chip U2 will immediately latch the enabling signal of the first enabling module 13 to the high-level state, thereby ensuring that a step-down module will not be powered down when the 5V power supply is abnormally powered down, that is, can still output normally. An adhesion failure of the relay caused since the relay and other switching elements are directly disconnected without being discharged or directly attracted without being attracted is prevented. A very good power supply protection effect is achieved and reliable operation of the system is ensured.

In addition, in the traditional sleep and wake-up, the wake-up and sleep of the BMS are controlled by controlling the power-on and power-off of the BMS through an external relay switch, and the BMS cannot be intelligently slept and awakened per se. If the battery is at an idle state for a long time, there will be a risk of over-discharge. Therefore, in the embodiment of the present application, when the control module 12 detects that the battery device 100 is at the idle state, the control chip U2 will also remove the enabling state latch of the first enabling module 13, that is, the level state of the enabling pin of the power management chip U3 is switched to the low level. At this time, the power management chip U3 enters a sleep state without working, thereby causing the battery management system to enter the sleep state. Therefore, the control circuit for a battery device in the embodiment of the present application can also intelligently control the battery management system to enter the sleep state and the wake-up state.

Those of ordinary skill in the art should realize that the above embodiments are only used to illustrate the present application instead of limiting the present application. The appropriate changes and alterations made to the above embodiments fall within the scope of protection claimed by the present application as long as they are within the scope of an essential spirit of the present application.

## Claims

1. A control circuit for a battery device, used to be electrically connected between a battery module and an output port of the battery device, wherein the control circuit comprises:
a first power management module, a control module, and a first enabling module;
the first power management module is used to receive a first enabling signal of a trigger element of the battery device and a first voltage output by the battery module, and convert the first voltage into a second voltage to supply power to the control module and the first enabling module;
the control module is used to control the first enabling module to output a second enabling signal to the first power management module; and
when the control module is abnormally reset, the first enabling module outputs the second enabling signal to the first power management module.

2. The control circuit for a battery device according to claim 1, wherein the first enabling module comprises a logic element, a first input pin, a second input pin, and a third input pin of the logic element are all electrically connected to the control module, a power pin of the logic element is electrically connected to a power supply, a grounding pin of the logic element is grounded, and an output pin of the logic element is electrically connected to the first power management module.

3. The control circuit for a battery device according to claim 1, wherein the control circuit further comprises a second power management module, the second power management module is electrically connected between the first power management module and the control module, and the second power management module is used to convert the second voltage into a third voltage to supply power to the control module.

4. The control circuit for a battery device according to claim 1, wherein the control circuit further comprises a third power management module, the third power management module is electrically connected between the first power management module and the first enabling module, and the third power management module is used to convert the second voltage into a fourth voltage to supply power to the first enabling module.

5. The control circuit for a battery device according to claim 1, wherein the control circuit further comprises a second enabling module, the second enabling module is electrically connected between the first power management module and the control module, and the control module is used to control the second enabling module to output a third enabling signal to the first power management module.

6. The control circuit for a battery device according to claim 1, wherein the control circuit further comprises a filtering module, the filtering module is electrically connected between the battery module and the first power management module, and the filtering module is used to filter the first voltage output by the battery module and then provide the same to the first power management module.

7. The control circuit for a battery device according to claim 2, wherein the first power management module comprises a power management chip and a first diode, an enabling pin of the power management chip is electrically connected to a cathode of the first diode and the output pin of the logic element is electrically connected to an anode of the first diode.

8. The control circuit for a battery device according to claim 7, wherein the first power management module further comprises a second diode, the second enabling module comprises a first resistor, a first terminal of the first resistor is electrically connected to the control module, a second terminal of the first resistor is electrically connected to an anode of the second diode, and a cathode of the second diode is electrically connected to the enabling pin of the power management chip.

9. The control circuit for a battery device according to claim 8, wherein the first power management module further comprises a third diode, an anode of the third diode is electrically connected to the trigger element, and a cathode of the third diode is electrically connected to the enabling pin of the power management chip.

10. The control circuit for a battery device according to claim 1, wherein the control circuit further comprises a switching element, and the first power management module is electrically connected between the battery module and the switching element to supply power to the switching element and the control module.

11. The control circuit for a battery device according to claim 1, wherein the control module is abnormally set when a load resistor connected to the output port of the battery device changes suddenly or a program of the control module is not controlled by logic.

12. The control circuit for a battery device according to claim 1, wherein the first enabling signal is used to control the working of the first power management module to convert the first voltage into the second voltage.

13. The control circuit for a battery device according to claim 1, wherein the control module is further used to output a latch signal to latch an output state of the first enabling module.

14. The control circuit for a battery device according to claim 13, wherein when the control module detects that the battery device is at an idle state, the control module removes the latching of the output state of the first enabling module and control the first enabling module to output a sleep signal to the first power management module, and the sleep signal is used to control the battery management system to enter a sleep state.
